# EUROPEAN PATENT APPLICATION

(11) **EP 2 234 002 A1**
(43) Date of publication of application: **29.09.2010**
(21) Application number: 09004253.2
(22) Date of filing: 25.03.2009
(51) Int. Cl.: G06F 1/26, G06F 9/44

(54) **System having automatic turn on/off schedule and a method of system automatic turn on/off schedule control**

(71) Applicant: Giga-Byte Technology Co., Ltd., Hsin-Tien Taipei County (TW)
(72) Inventor: Lin, Chih Hao, Hain-Tien, Taipei County (TW)
(74) Representative: Brandenburger, Karin

(57) **Abstract**

A system having automatic turn on/off schedule and a method of system automatic turn on/off schedule control which provide users to set several automatic turn on/off time, and the system time can be checked through periodic interrupt generated from an IC. A next turn on time is set, when the system time reaches or exceeds the automatic turn off time, and the system will shutdown when the setting is finished A system time is checked through the periodic interrupt when the system restart to enable the periodic interrupt, and the next turn on/off time set by users will be compared. Constantly repeat the circulative steps till all automatic turn on/off time is processed. Therefore, it is possible to reach the schedule of automatic turn on/off via firmware.

## Description

### BACKGROUND OF THE INVENTION

### Field of the Invention

The invention relates to a system and its control method, and more particularly to a system having automatic turn on/off schedule and a method of system automatic turn on/off schedule control.

### Description of the Related Art

Current electric devices generally integrate many common elements, such as Mother Board (MB), Random Access Memory (RAM), Basic Input/ Output System (BIOS), Network Interface Card (NIC), and so on, is similar to personal computers (PC).

For some reasons or some time, users have to leave the electric device, so he can not turn on (boot, or start) an electric device to make the electric device to execute a boot process. Nevertheless, if the boot process is executed in advance, the electric device will be Idle and waste the power. Similarly, for some reasons or some time, users have to leave the electric device, but the electric device is still operating some programs and can not be turned off (shutdown) immediately. Therefore, let the electric device still keep a turn on status.

For preventing from users can not operate turn on/off actions on the instant, a Basic Input/Output System of an electric device provides a wakeup mechanism for users to set when a boot process of an electric device is executed? There are many wakeup mechanisms, such as Resume On Ring of a MODEM, Wake On LAN, Wake On Ring, and so on. Many programs operated in the electric device can provide the functionality of reserve shutdown, so users can set .when a shutdown process of the electric device is executed.

However, the Basic Input/Output System of the electric device provides a wakeup mechanism only can be operated once. Hence, it can not provide the wakeup mechanism for multiple times. The operating program of the electric device only can provide the reserve shutdown setting on the instant, and can not provide the functionality of reserve shutdown setting for multiple times. No matter the Basic Input/Output System of the electric device, or the operating program of the electric device, both of them can not provide the functionality of multiple automatic turn on/off schedule control.

### BRIEF SUMMARY OF THE INVENTION

Present invention provides a system of automatic turn on/off schedule and a method of system automatic turn on/off schedule control. They can prevent the electric device only can automatic shutdown once through a application program, or the electric device only can automatic boot once through the Basic Input/Output System, and can not reach both of them only can turn on/off once, and can not reach the functionality of multiple automatic turn on/off schedule control.

A method of system automatic turn on/off schedule control according to present invention can be applied to an electric device. The method of system automatic turn on/off schedule control comprises: first,: turning on a system power of said electric device for executing a boot process (Step 1); then, searching a setting record of automatic turn on/off (Step 2); then, enabling a periodic interrupt when said setting record of automatic turn on/off is read (Step 3); then, finishing said boot process of said electric device (Step 4); then, reading a turn off time from said setting record of automatic turn on/off (Step 5); then, checking a system time of said electric device through said periodic interrupt, and comparing said system time and said turn off time (Step 6); then, setting a next turn on time when said system time is equal to said turn off time (Step 7); then, detecting an Operating System of Advanced Configuration and Power Interface (Step 8); and then executing a shutdown process of said electric device through said Operating System of Advanced Configuration and Power Interface when said Operating System of Advanced Configuration and Power Interface is in the executing status (Step 9).

Wherein, each setting record of automatic turn on/off is stored in a setting storage device, such as Complementary Metal-Oxide-Semiconductor (CMOS), Non-Volatile Random Access Memory (NVRAM), Flash disk or Hard Disk, and so on.

Wherein, Step 5 can read the current system time from the setting storage device.

Wherein, Step 7 can set a next turn on time. Principally, the process is to set a next turn on time in the setting storage device, comprising the following process: clearing an Alarm Flag; setting a RTC wakeup time; enabling an alarm interrupt; clearing a record of input/output buffer; and enabling a alarm wakeup event.

Wherein, Step 8 will first search a Flag of Advanced Configuration and Power Interface; and determine said Operating System of Advanced Configuration and Power Interface is in the executing status when said Flag of Advanced Configuration and Power Interface is enabled.

Step 9, the process can go back to Step 5 and execute Step 5, when said Operating System of Advanced Configuration and Power Interface is not in the executing status. Step 9, the process can execute said shutdown process of said electric device through a normal Operating System, when said Operating System of Advanced Configuration and Power interface is absent. That is, users or process module can write a soft off command to a Port of Advanced Configuration and Power Interface for executing said shutdown process of said electric device.

A method of system automatic turn on/off schedule control according to present Invention, further comprise; checking said system time of said electric device, and comparing said system time with said next turn on time of the setting record of automatic turn on/off (Step 10), and going back to Step 1 to execute Step 1, when said system time is equal to said next turn on time (Step 11).

According to a system having an automatic turn on/off schedule disclosed in present invention, applied to an electric device having an operating system executing , comprises: a substrate, set in said electric device; a setting storage device, set on said substrate, having a Basic input/Output System; a connector unit, set on said substrate, electrically connecting to said setting storage device; and an external connecting device, electrically connecting to said connector unit for changing the setting of said Basic input/Output System for operating a method of system automatic turn on/off schedule control.

Wherein, the system having an automatic turn on/off schedule, an external connecting is connected with a connector unit for changing the setting of said Basic Input/Output System for operating a method of system automatic turn on/off schedule control.

Hence, the system of automatic turn on/off schedule and the method of system automatic turn on/off schedule control of present invention, can reach multiple system automatic turn on/off schedule controls are through the firmware program. Besides, it also can automatic determine the turn on/off time according to settings of users, and execute the turn on/off process to make the electric device automatic turn on/off without users operating the switch button, when reaching the setting time.

A detailed description is given in the following embodiments with reference to the accompanying drawings.

### BRIEF DESCRIPTION OF THE DRAWINGS

The invention can be more fully understood by referring to the following detailed description and examples with references made to the accompanying drawings, wherein:
FIG. 1 is fist part flowchart of an exemplary embodiment of a method of system automatic turn on/off schedule control;
FIG. 2 is second part flowchart of an exemplary embodiment of a method of system automatic turn on/off schedule control;
FIG. 3 is third part flowchart of an exemplary embodiment of a method of system automatic turn on/off schedule control; and
FIG. 4 is a schematic diagram of another exemplary embodiment of a system having automatic turn on/off schedule.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

The method of system automatic turn on/off schedule control can be sequentially illustrated for the three parts: the first part, the second part and the third part. The first part is the boot process of a method of system automatic turn on/off schedule control, the second part is the process from the end of boot process to shutdown process of a method of system automatic turn on/off schedule control, the third part Is the process from end of shutdown process to next boot process of a method of system automatic turn on/off schedule control.

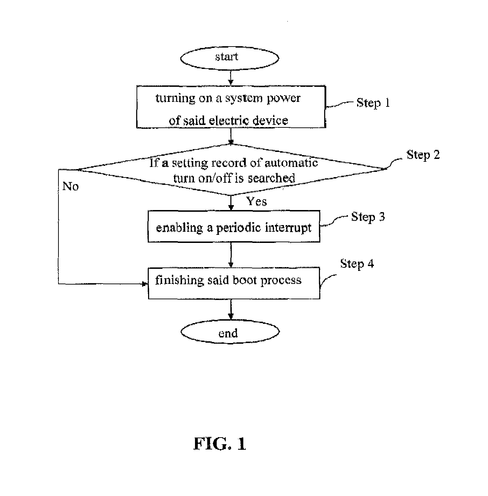

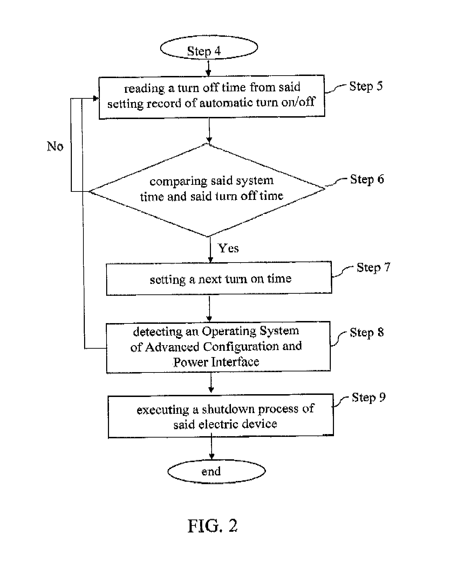

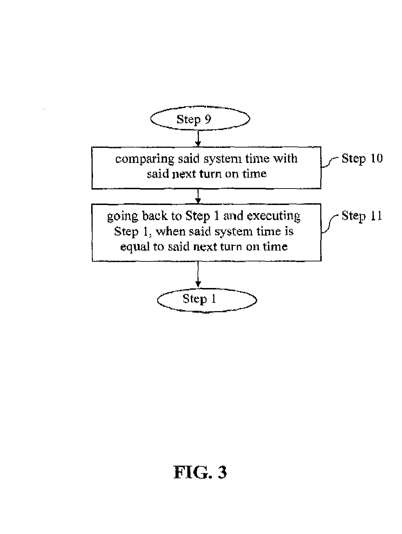

FIG. 1 is fist part flowchart of an exemplary embodiment of a method of system automatic turn on/off schedule control according to present invention. FIG. 2 is second part flowchart of an exemplary embodiment of a method of system automatic turn on/off schedule control according to present invention. FIG. 3 is third part flowchart of an exemplary embodiment of a method of system automatic turn on/off schedule control according to present invention.

Please refer to FIG. 1, FIG. 2, and FIG. 3, the method of system automatic turn on/off schedule control can be applied to an electric device. The method of system automatic turn on/off schedule control comprises: first,: turning on a system power of said electric device for executing a boot process (Step 1); then, searching a setting record of automatic turn on/off (Step 2); then, enabling a periodic interrupt when said setting record of automatic turn on/off Is read (Step 3); then, finishing said boot process of said electric device (Step 4); then, reading a turn off time from said setting record of automatic turn on/off (Step 5); then, checking a system time of said electric device through said periodic interrupt, and comparing said system time and said turn off time (Step 6); then, setting a next turn on time when said system time is equal to said turn off time (Step 7); then, detecting an Operating System of Advanced Configuration and Power Interface (Step 8); and then executing a shutdown process of said electric device through said Operating System of Advanced Configuration and Power Interface when said Operating System of Advanced Configuration and Power Interface is in the executing status (Step 9).

The method of System automatic turn on/off schedule control according to present invention, Step 1 can turn on a system power of said electric device for executing a boot process, that is, the Basic Input/Output System start to operate.

Wherein, the method to turn on the electric device is through the element of electric actuator, such as the hardware device of power switch or switch button, or other method to power on the electric device.

Due to the Basic Input/Output System is used to manage the firmware of an electric device, so the Basic Input/Output System will start up first after turn on an electric device, and then Basic Input/Output System will completely detect and test the element of the electric device (or computer). Then, Step 2 can search a setting record of automatic turn on/off; that is, a process module of an electric device will search each setting record of automatic turn on/off. Wherein, each setting record of automatic turn on/off is stored in a setting storage device. The setting storage device can be a Complementary Metal-Oxide-Semiconductor (CMOS), a Non-Volatile Random Access Memory (NVRAM), a Flash disk, a Hard Disk, and so on.

Step 3 can enable a periodic interrupt when said setting record of automatic turn on/off is read. Wherein, periodic interrupts are different according to different hardware and chipset (or IC), selectivity chosen from System Management Interrupt (SMI), Power Management Timer (PM Timer), or Serial Interrupt Request (Serial IRQ) of a chipset for generating a functionality of periodic interrupt. According to the periodic system interrupt generated from the functionality of System Management interrupt or Power Management Timer of a chipset can check system time and compare with automatic turn on/off time set by users.

Then, Step 4 is to detect all hardware elements connected to the electric device and the system settings to finish the boot process of the electric device.

Wherein, in the Step 2, if the process module can not search the setting record of automatic turn on/off, then the original boot process (such as detecting all hardware elements connected to an electric device and the system settings) will be continued for flnishing the boot process (Step 4). That is, if the setting record of automatic turn on/off can not be searched in the Step 2, then the process will directly go to Step 4 and execute Step 4.

From Step 1 to Step 4 is the boot process of a method of system automatic turn on/off schedule control of present invention, in another word, the first part of a method of system automatic turn on/off schedule control.

Then, Step 5 is to read a turn off time of the setting record of automatic turn on/off from setting storage device through process module..

Subsequently, Step 6 is constantly check a system time of said electric device through said periodic interrupt, and compare with said turn off time (automatic turn off time set by users) read from setting storage device through process module for determining if the system time is equal to the time read from setting storage device.

If the system time is not equal to the time read from setting storage device in the Step 6, then the process will go back to Step 5.The process module read the turn off time of setting record of automatic turn on/off from setting storage device again, and then process Step6 to determine if the system time Is equal to the turn off time read from setting storage device.

Wherein, process module can check a system time through the functionality of periodic system Interrupt, and process module can read the current system time through setting storage device.

If the system time is equal to the turn off time In Step 6, then Step7 will be processed to set the next turn on time.

Wherein, the process of setting the next turn on time is to set the next turn on time in the setting storage device. The principal process to set the next turn on time in the setting storage device comprises: first, clearing an Alarm Flag; then setting a RTC wakeup time; then enabling an alarm interrupt; then clearing a record of input/output buffer; and then enabling an alarm wakeup event.

Wherein, from Step 5 to Step7 is the process from the boot process to shutdown process of a method of system automatic turn on/off schedule control of present invention, in another word, the second part of a method of system automatic turn on/off schedule control.

Then, Step 8, the process module can detect if an Operating System of Advanced Configuration and Power Interface exist? In another words, the process module can search the Flag of Advanced Configuration and Power Interface. Wherein, when Flag of Advanced Configuration and Power Interface is enabled, the Operating System of Advanced Configuration and Power Interface is determined in the executing status.

In another word, when the system enters the Operating System of Advanced Configuration and Power Interface, the enabled value will fill in a System Management Interrupt port (SMI port). When System Management Interrupt port is filled the enabled value of Advanced Configuration and Power Interface, a Flag will be record and saved in a storage unit for making a process module to determine if an Operating System of Advanced Configuration and Power Interface exist?

If the Operating System of Advanced Configuration and Power Interface exist and is not in the executing status, then go back Step5 and execute Step5.

Hence, Step 9, if the Operating System of Advanced Configuration exist and in the executing status, then the Operating System of Advanced Configuration will execute the shutdown process.

Step 9, if the Operating System of Advanced Configuration is absence, a normal operating system (OS) will execute the shutdown process. That is to say, users or process module can write a soft off command to a Port of Advanced Configuration and Power Interface for executing the shutdown process of the electric device.

A method of system automatic turn on/off schedule control according to present invention further comprise: checking said system time of said electric device, and comparing said system time with said next turn on time in setting record of automatic turn on/off (Step 10), and going back to Step 1 and executing Step 1, when said system time Is equal to said next turn on time (Step 11).

After an electric device processes the shutdown process, the electric device still needs to provide a standby power to the internal process module, the chipset and the setting storage device, for operating. At this time, the Real Time Clock (RTC) set in the electric device will still work for maintaining the correct system time through the power provided by a rechargeable battery or a dry battery. Hence, Step 10 constantly check the system time through the functionality of periodic system interrupt of a chipset, and compare the system time with the next turn on time of setting record of automatic turn on/off.

Last, Step 11, if the functionality of periodic system interrupt of a chipset checks the system time is equal to the next turn on time, then the system power of the electric device will be power on for executing the boot process, in another word, the process will go back to Step 1 and execute Step 1.

Wherein, from Step 10 to Step 11 is is the process from the shutdown process to the next boot process of a method of system automatic turn on/off schedule control of present invention, in another word, the third part of a method of system automatic turn on/off schedule control.

Hence, the method of system automatic turn on/off schedule control, users can set multiple automatic turn on/off time, and the functionality of periodic system interrupt of a chipset can check the system time through periodic system interrupt. When the system time reach or exceed the automatic turn off time, then the next turn on time will be set, and the machine turn off after finishing the setting. The periodic interrupt generated from a chipset will be enabled again for checking the system time, and comparing with the next turn on/off time set by users, when the time of next boot process. Constantly, repeat the circulative Steps till all automatic turn on/off time is executed.

The method of system automatic turn on/off schedule control of present invention can reach multiple system automatic turn on/off schedule control through firmware, and automatic determine turn on/off time according to a user's setting. When reaching the setting time, the users don't need to operate the switch button, the automatic turn on/off instructions will be executed to make the electric device turn on/off.

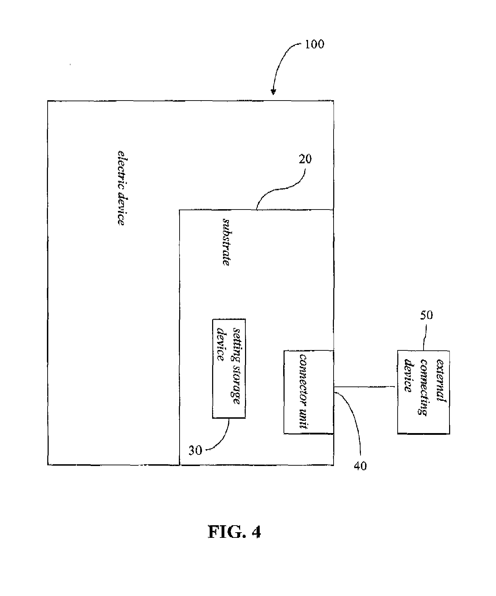

FIG. 4 is a schematic diagram of another exemplary embodiment of a system having automatic turn on/off schedule according to present invention.

Please refer to FIG. 4 and also refer to above mentioned embodiment. The system having an automatic turn on/off schedule of present invention can apply to an electric device 100 having an operating system comprising: a substrate 20, setting storage device 30, connector unit 40, and external connecting device 50.

A substrate 20 is set in said electric device 100, and a setting storage device 30 is set on said substrate 20.

A connector unit 40 is set on said substrate 20, electrically connecting to said setting storage device 30.

An external connecting device 50 is electrically connecting to the connector unit 40 for changing the setting of said Basic Input/Output System for operating a method of system automatic turn on/off schedule control.

A substrate 20 can be a Printed Circuit Board (PCB), and the substrate 20 can be one of Flexible Printed Circuit (FPC) or Rigid Printed Circuit Board (Rigid PCB).

The setting storage device 30 can be a Read-Only Memory (ROM).

The connector unit 40 can be any connector interface, such as a Universal Serial Bus (USB) interface, or an IEEE 1394 connector interface.

Wherein, the system having an automatic turn on/off schedule, the setting value of said Basic Input/Output System in setting storage device can be changed for operating above mentioned method of system automatic turn on/off schedule control is by way of connecting an external connecting device 50 to the connector unit 40.

The system having an automatic turn on/off schedule and the method of system automatic turn on/off schedule control of present invention can reach multiple system automatic turn on/off schedule control through a firmware, and automatic determine turn on/off time according to a user's setting. When reaching the setting time, the users don't need to operate the switch button, the automatic turn on/off instructions will be executed to make the electric device turn on/off.

The above description is given by way of example, and not limitation. Given the above disclosure, one skilled in the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A method of system automatic turn on/off schedule control, applied to an electric device comprising:
Step 1: turning on a system power of said electric device for executing a boot process;
Step 2: searching a setting record of automatic turn on/off;
Step 3: enabling a periodic interrupt when said setting record of automatic turn on/off is read;
Step 4: finishing said boot process of said electric device;
Step 5 reading a turn off time from said setting record of automatic turn on/off;
Step 6: checking a system time of said electric device through said periodic interrupt, and comparing said system time and said turn off time;
Step 7: setting a next tum on time when said system time is equal to said turn off time;
Step 8: detecting an Operating System of Advanced Configuration and Power Interface, and
Step 9: executing a shutdown process of said electric device through said Operating System of Advanced Configuration and Power Interface when said Operating System of Advanced Configuration and Power Interface is in the executing status.

2. The method of system automatic turn on/off schedule control as claimed in claim I, wherein Step 9 further comprises:
going back to Step 5 to execute Step 5, when said Operating System of Advanced Configuration and Power Interface is not in the executing status.

3. The method of system automatic turn on/off schedule control as claimed in claim I, wherein Step 9 further comprises:
executing said boot process of said electric device through a normal Operating System, when said Operating System of Advanced Configuration and Power Interface is absent.

4. The method of system automatic turn on/off schedule control as claimed in claim 3, wherein said shutdown process of said electric device through said normal Operating System comprises:
writing a soft off command to a Port of Advanced Configuration and Power Interface for executing said shutdown process of said electric device.

5. The method of system automatic turn on/off schedule control as claimed in claim I, wherein said checking said system time of said electric device in Step 6 reads said system time through a setting storage device.

6. The method of system automatic turn on/off schedule control as claimed in claim I, wherein each setting record of automatic turn on/off is stored in a setting storage device.

7. The method of system automatic turn on/off schedule control as claimed in claim I, wherein Step 8 further comprises:
searching a Flag of Advanced Configuration and Power Interface; and
wherein determining said Operating System of Advanced Configuration and Power Interface is in the executing status when said Flag of Advanced Configuration and Power Interface is enabled.

8. The method of system automatic turn on/off schedule control as claimed in claim 6, wherein Step 7 further comprises:
setting a next turn on time in said setting storage device.

9. The method of system automatic turn on/off schedule control as claimed in claim 8, wherein said setting said next turn on time in said setting storage device comprises:
clearing an Alarm Flag;
setting a RTC wakeup time;
enabling an alarm interrupt;
clearing a record of input/output buffer; and
enabling an alarm wakeup event.

10. The method of system automatic turn on/off schedule control as claimed in claim 1, wherein further comprises:
Setp 10: checking said system time of said electric device, and comparing said system time with said next turn on time of said setting record of automatic turn on/off.

11. The method of system automatic turn on/off schedule control as claimed In claim 1, wherein further comprises:
Setp 11: going back to Step 1 to execute Step 1, when said system time is equal to said next turn on time.

12. A system having an automatic turn on/off schedule, applied to an electric device which executing an operating system comprising:
a substrate, set in said electric device;
a setting storage device, set on said substrate, having a Basic Input/Output System;
a connector unit, set on said substrate, electrically connecting to said setting storage device; and
an external connecting device, electrically connecting to said connector unit for changing the setting of said Basic Input/Output System for operating a method of system automatic turn on/off schedule control.
